(19) Europäisches Patentamt
European Patent Office
Office européen des brevets

(11) **EP 1 662 227 B1**

(12) **EUROPEAN PATENT SPECIFICATION**

(45) Date of publication and mention
of the grant of the patent:
**13.06.2007   Bulletin 2007/24**

(21) Application number: **04742088.0**

(22) Date of filing: **14.07.2004**

(51) Int Cl.:
*G01B 11/30* [(2006.01)]       *G01N 21/49* [(2006.01)]

(86) International application number:
**PCT/ES2004/070050**

(87) International publication number:
**WO 2005/008175 (27.01.2005 Gazette 2005/04)**

(54) **OPTICAL METHOD AND DEVICE FOR TEXTURE QUANTIFICATION OF PHOTOVOLTAIC CELLS**

OPTISCHES VERFAHREN UND EINRICHTUNG ZUR TEXTURQUANTIFIZIERUNG PHOTOVOLTAISCHER ZELLEN

PROCEDE ET DISPOSITIF OPTIQUE DE QUANTIFICATION DE LA TEXTURE DE CELLULES PHOTOVOLTAIQUES

(84) Designated Contracting States:
**AT BE BG CH CY CZ DE DK EE ES FI FR GB GR HU IE IT LI LU MC NL PL PT RO SE SI SK TR**

(30) Priority: **15.07.2003   ES 200301666**

(43) Date of publication of application:
**31.05.2006   Bulletin 2006/22**

(73) Proprietor: **CONSEJO SUPERIOR DE INVESTIGACIONES CIENTIFICAS**
**28006 Madrid (ES)**

(72) Inventors:
- **ZALDO LUEZAS, Carlos Enrique**
  **E-28049 Madrid (ES)**
- **ALBELLA MARTIN, José Maria**
  **E-28049 Madrid (ES)**
- **FORNIES GARCIA, Eduardo**
  **E-28049 Madrid (ES)**

(74) Representative: **Ungria Lopez, Javier et al**
**Avda. Ramon y Cajal, 78**
**28043 Madrid (ES)**

(56) References cited:
**WO-A1-98/25131          WO-A2-02/079760**
**WO-A2-03/054475**

- **PARRETTA, A. ET AL.: 'Angle-dependent reflectance measurements on photovoltaic materials and solar cells' OPTICS COMMUNICATIONS vol. 172, no. 1-6, 15 December 1999, pages 339 - 151, XP004333653**
- **PARRETTA, A. ET AL.: 'A new approach to the analysis of light collected by textured silicon surfaces' 3RD WORLD CONFERENCE ON PHOTOVOLTAIC ENERGY CONVERSION vol. 1, 11 May 2003 - 18 May 2003, OSAKA, pages 122 - 125, XP002997350**

## Description

## FIELD OF THE INVENTION

This invention is related to the production engineering industry, and more particularly to the sector concerned with the production of photovoltaic cells, and therefore it also has a bearing on the alternative energy sector. The invention relates to the control of the methods used for texturing the surface of monocrystalline silicon, although it is also applicable to the textures developed on the surface of silicon and other multicrystalline and polycrystalline semiconductors.

## DESCRIPTION OF THE PRIOR ART

Decreasing the optical reflectance of the photosensitive side of the cell is an essential step of the manufacturing process necessary to improve the efficiency with which the photovoltaic cell converts the incident light into electric power. This is achieved by applying anti-reflectant coatings and inducing a well defined texture on the surface of the cell. Frequently, these two effects are achieved consecutively.

During the texture forming process the cell develops a rough surface morphology [1,2], a porous or cavity-ridden morphology [3,4], or a faceted morphology [5] that allows multiple reflections on the surface before the light escapes irretrievably to the incident media (typically air or a transparent coating) and that additionally traps the long wave light by means of a total internal reflection (infrared light close to the Si gap) that penetrates in the active boundary area.

Due to the high cost of crystalline materials, industrial production of photovoltaic cell technology is focused on silicon substrates (Si), although several crystalline quality grades are used. The highest quality cells use monocrystalline silicon (c-Si). Multicrystalline silicon (mc-Si), in which several crystalline grains have the same orientation, is also used. Currently, there is a great ongoing effort to improve the performance of thin sheets of polycrystalline silicon (p-Si). The methods used to texture the three different types of Si are also different.

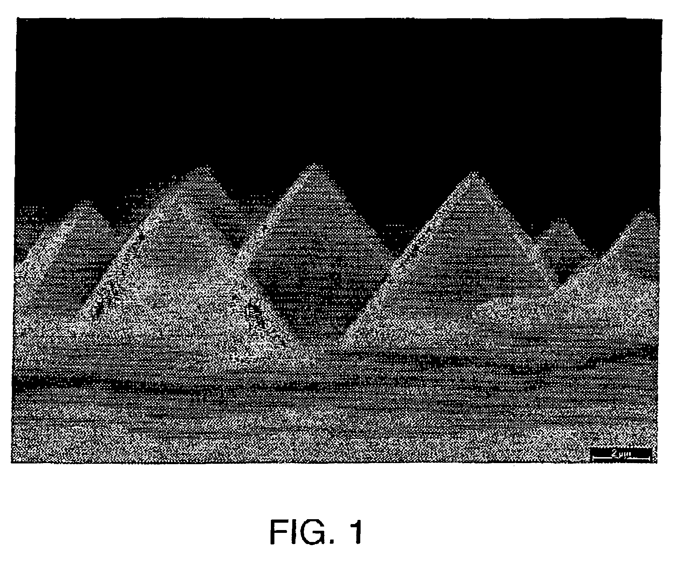

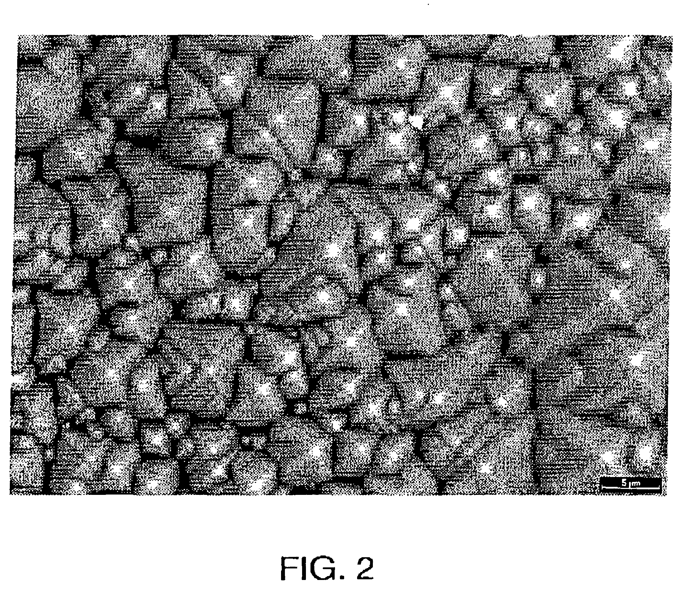

The usual method to develop texture in monocrystalline silicon wafers is chemical surface treatment or etching, consisting in immersing the wafers in caustic baths that attack certain silicon crystalline planes preferentially [6,7], producing a random distribution of pyramid-shaped structures with a square base (figs.1 and 2), where all the pyramids present mutually parallel faces. This particular shape of the pyramids is caused by silicon's cubic symmetry and the appearance of planes (111) induced by the preferential chemical etching processes. Typically, when the degree of texture is high, the side of the pyramid's base is 5 -10 $\mu$m and the tilt angle of the pyramid's lateral sides in relation to the substrate surface ($\alpha$) is close to, but smaller than the cutting angle between the planes (111) and (100), or 54.735°. The tilt $\alpha$ depends slightly on the details of the chemical etching process that generates the texture and the values observed range from $\alpha$ = 49 -53°. This type of texture appears independently of the chemical agent used for the etching process that can be NaOH [7]. $Na_3PO4:12H2O$ [8] or $Na_2CO3$ [9]. A variation of this texturizing method is the formation of inverted pyramids [10], although in this particular case the geometry of the texture is periodical and can be pre-determined by the manufacturer by means of a lithographic process.

To characterize the anti-reflectant coatings, the techniques and instruments used (spectrophotometers, interferometers and ellipsometers) are based in optical methods that allow the evaluation without establishing physical contact with the cell, however, the study of the surface's texture is usually done by scanning electron microscopy (SEM) or with a profilometer and a scanning force microscope (SFM) with or without contact. Aside from the cost incurred in the utilization of these techniques, their adaptations to the industry as a quality control system of the cell's texture present certain difficulties. The scanning electron microscopy (SEM) requires a low pressure environment around the cell to work and the analyzed area may sustain damages due to the incidence of the electron beam. Also, the time required to perform the analysis considerably exceeds the speed of processing required for the production process. The profilometers, on the other hand, either work in contact mode, which may scratch the cell, or in optical mode that, while without contact, is developed to work on flat surfaces and do not adapt well to rugged and faceted surfaces because the reflectance is non-specular. The analysis time required both for scanning electron microscopy and for profilometry is in the order tens of minutes and therefore significantly longer than the time required for the individual analysis of cells in the production line (which is in the order of seconds).

There is prior research work that has focused on the optical reflectance of textured photovoltaic cells [11, 12]. These papers report either an integral measurement of the total or diffuse reflectance or measures of specular reflectance even with normal incidence. The source of collimated light used is a HeNe laser with spectral coherence. For measurements concerned with non-coherent light a quartz lamp is used as source and the beam is focused (non-collimated). Ignoring some effects observed in periodical textures [11] and that are associated to the interference of the multiple beams associated to the HeNe laser coherence, the patterns of optical intensity analyzed in these works have a circular symmetry around the measurement axis [11]. The goal of these works is not to analyze the degree of texturization (which is known beforehand), but to evaluate the light-trapping efficacy of the texture.

In [12], angle-dependant reflectance measurements on photovoltaic cells are shown. These also include measurements at different azimuthal angles for different angles of incidence, see Fig. 10.

The objective of the method invented and the proposed devices resides in the development of a non-contact method for the quantitative analysis of the degree of texture in Si wafers that is suitable for implementation in the production line. It is mainly geared to the study or random texturization, although it is applicable to textures exhibiting periodicity. It is, therefore, a measuring instrument with a high level of performance that enables the user to accurately and instantaneously know the degree of texture of each individual cell immediately after the chemical etching process. The early detection of cells with a low degree of texturization allows for re-processing, avoiding having to reject them later and therefore avoiding the associated production costs of such an action. The method is based in the analysis of the reflectance of a beam of collimated light, without the light having to have a high spectral coherency, which makes the use of a laser source not essential, although the use of a laser source of light is advisable for practical purposes.

The optimal formation of the aforementioned pyramids depends on several factors, such as temperature, pH of the bath solution, immersion times and the location of the wafers in the bath, as well as the initial state of the surface of the wafer amongst other factors. The degree of ageing of the bath also plays a fundamental role. Because the effect of the chemical etching process is not cumulative, but reaches a degree of maximum texture (maximum wafer area covered by pyramids) after which these pyramids are later flattened and disappear, the early detection of the decrease in texture allows us to know at every given moment, the status of the chemical baths used for their development, and therefore, we can take appropriate action before their degradation is obvious when inspecting the final product. In this manner two objectives would be achieved: one would be to lengthen the life of the baths by means of controlled addition of the necessary components, and the other would be to avoid the introduction in the production line of wafers with an intermediate degree of texturing that would result in efficiencies below the optimum expected at the end of the process.

## REFERENCES

[1] K. Fukui, Y. Okada, H. Inomata, S. Takahashi, Y. Fujii, Fukawa and K. Shirasawa:"Surface and bulk-passivated large area multicrystalline silicon solar cells." Solar Energy Materials & Solar Cells: 48,219-228 (1997).

[2] W.A. Nositschka, C. Beneking, O. Voigt and H. Kurz: "Texturisation of multicrystalline silicon wafer for solar cells by reactive ion etching through colloidal masks." Solar Energy Materials & Solar Cells: 76, 155-166 (2003).

[3] Y. Yerokhov, R. Hezel, M. Lipinski, R. Ciach, H. Nagel, A. Mylyanych and P. Panek: "Cost-effective methods of texturing for silicon solar cells." Solar Energy Materials & Solar Cells: 72, 291-298 (2002).

[4] J. Zhao, A. Wang, M.A. Green and F. Ferraza: "19.8% efficient "honeycomb" textured multicrystalline and 24.4% monocrystalline silicon solar cells." Applied Physics Letters: 73, 1991-1993 (1998).

[5] P. Campbell and M.A. Green: "High performance light trapping textures for monocrystalline silicon solar calls." Solar Energy Materials & Solar Cells: 65, 369-375 (2001).

[6] Holdermann, K: "Method for the wet chemical pyramidal texture etching of silicon surfaces." US Patent N˚ 6,451,218.

[7] Bailey W.L., Coleman, M.G. Harris, C.B. Lesk and I.A. Lesk: "Texture etching of silicon: method." US Patent N˚ 4,137,123.

[8] Z. Xi, D. Yang and D. Que: "Texturization of monocrystalline silicon with tribasic sodium phosphate." Solar Energy Materials & Solar Cells: 77, 255-263 (2003).

[9] Y. Nishimoto and K. Namba: "Investigation of texturization for crystalline silicon solar cells with sodium carbonate solutions." Solar Energy Materials & Solar Cells: 61, 393 - 402 (2000).

[10] W. Miller, A. Metz and R. Hezel: "A new and simple approach for fabricating inverted pyramids on crystalline silicon solar cells." Proceedings of the 17th European Photovoltaic Solar Energy Conference, Munich (2001).

[11] A. Paretta, E. Bobeico, L. Lancellotti, P. Morvillo, A. Wang and J. Zhao: "A new approach to the analysis of light collected by textured silicon surfaces." Paper 1P- C3 -14 in the 3rd World Conference on Photovoltaic Energy Conversion, Osaka, May 12-16 (2003).

[12] A. Paretta, A. Sarno, P. Tortota, H. Yakubu, P. Maddalena, J. Zhao and A. Wang: "Angle-dependent reflectance measurements on photovoltaic materials and solar cells." Optical Communications 172, 139-151 (1999).

## BRIEF DESCRIPTION OF THE INVENTION

The authors claim the invention of a Method and a device to determine the degree of texturization of materials, amongst others, the silicon wafers typically used as photovoltaic cells.

The technique proposed to establish the degree of texturization consists, basically, in irradiate the wafer's surface with a collimated light beam and quantify the patterns of optical reflectance. In the following text we will refer to laser light as the source for this process because of their generally good collimation properties, without intending to communicate by it that the coherent character of the laser light has a decisive influence on the present invention.

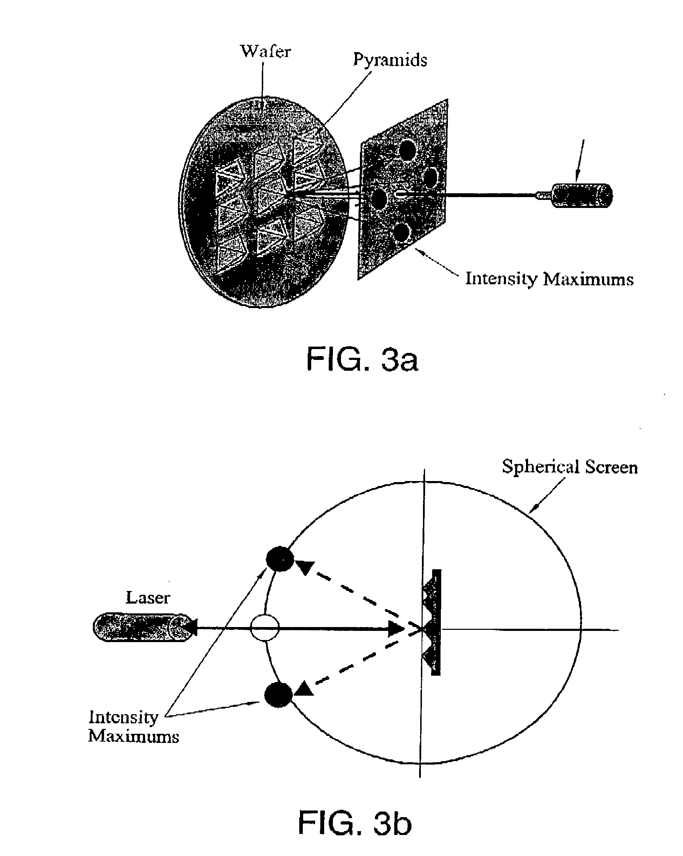

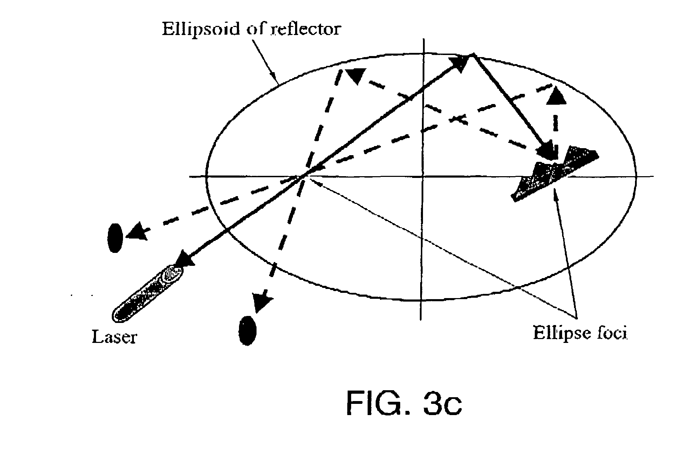

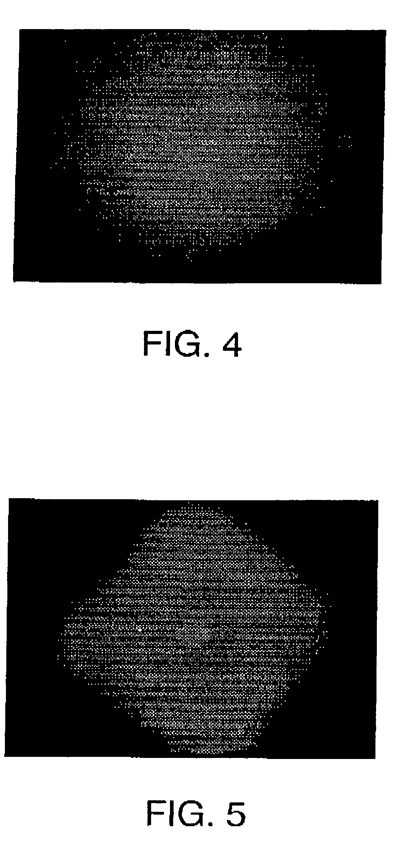

In the simplest assembly, the incident beam passes through an opening made on a flat screen where the light reflected by the wafer is viewed (figure 3). The pattern of reflectance observed when analyzing a wafer without texture is a central point with circular symmetry (figure 4) due to the spreading of the light over the ruggedness and surface defects of the wafer. The pattern of optical reflectance of the wafers with a high degree of texture is a central point as mentioned, but appearing with less intensity and accompanied by four circular areas with order four symmetry in relation to the direction of the incoming beam (figure 5). This last reflectance pattern is due to the reflection on the four side faces of the pyramids. Proof of this is that when the wafer is rotated on the axis established by the incoming laser beam, the reflected pattern rotates in solidarity with the wafer. It should be noted that the light reflected by the wafer does not exhibit significant polarization changes in relation to the incoming light and that the angular opening of the pattern of light reflected is not sensitive to the wavelength of the light used, which would demonstrate that it is associated to specular reflections on the microscopic facets of the sample.

The method and the device of the present patent are both applicable to those texture morphologies characterized by the development of correlated geometrical patterns on the surface of the substrate that supports the photovoltaic cell. These patterns may have individual dimensions and distances between two consecutive patterns that may be random or constant, but in all cases the faces of all the polyhedral shapes that make them up must be mutually parallel. These morphologies may be formed by several procedures, such as the chemical etching of the monocrystalline Si, whether with raised or inverted pyramids. The method described may also be used for the study of other degrees of texture developed in multicrystalline Si and the texture present in polycrystalline silicone deposited over previously textured substrates with the aforementioned conditions. It can also be applied to other materials presenting similar texturing patterns.

## DETAILED DESCRIPTION OF THE INVENTION

As described above, the method entails determining the pattern of reflectance associated to a textured surface (particularly those Si surfaces that have been subject to chemical etching to attain pyramidal shapes) that is originated by the light of a laser beam with normal incidence. This pattern is captured on a flat screen as shown on Figure 3a. According to the laws of reflection, the expected pattern for a surface composed of equal pyramid shapes would be composed of four points symmetrically located around the axis of the incoming beam, however, the presence of defects, non-textured areas, etc., causes an increase of the normal reflectance in detriment of the intensity associated to the texturing, which is the bases of the present method.

The geometry of the screen may be adapted to the circumstances of the design. Figures 3a and 3b, respectively, show some of the alternatives that include spherical or semi-spherical screens, in which the wafer is placed in the middle and ellipsoid of revolution type screens in which the incoming beam passes through a focus point and the wafer, appropriately oriented, is located on the other of the foci of the ellipsoid. All these designs share a common characteristic. The beam reflected on the normal overlaps the incoming beam and therefore, makes difficult the measuring of the light reflected on the normal to the wafer. A technical solution to this problem is described further into the text.

The measure of the degree of texture is obtained by comparing the intensity of the reflectance pattern with order four symmetry against the intensity exhibited in normal reflectance. To do this, it is necessary to place photodiodes over the screen and in the position of the maximums to register the intensity of the light. In a more elaborate version, detection may be done by means of a CCD detector or by a photodiode matrix distributed over the screen. The light source may be a low power monomode laser (< 10 mW) and good collimation properties (typically 1.5 mRad or lower) emitting in the region of $\lambda = 500 - 800$ nm, typically a HeNe laser ($\lambda = 633$ nm), of a semiconductor diode ($\lambda = 750 - 850$ nm) with collimating optics, or one of these lasers with infrared emission (A 1060 nm), or $Nd^{3+}$ ($\lambda \approx 1060$ nm), in both cases in conjunction with a frequency doubler.

The reflectance patterns corresponding to intermediate texture patterns exhibit the maximum intensity with a symmetry that corresponds to the number of faces of the geometries that make up the texture, although they may appear joined by bands of lesser intensity. This situation may be appreciated in the image that corresponds to the reflection of a wafer treated during 25 minutes, as shown in Figure 5, formed by a four-faced pyramid.

To characterize the degree of texture of the surface, the G parameter is defined as the relation between the sum of the intensities reflected in the maximums of the pattern with four order symmetry $I_{4n} (n = 1 - 4)$, and the intensity normally reflected to the surface of the wafer $I_N$

$$G = \frac{\sum\limits_{n=1-4} I_{4n}}{I_N}$$

This is a non-linear function that ideally has a value of zero for the wafer without texture and a value of infinite for a wafer with perfect texture, although its value is limited by the overlapping between the patterns with circular symmetry and the patterns exhibiting order four symmetry The parameter is not sensitive to the fluctuations of intensity of the laser beam.

There is a second set of parameters to characterize the uniformity of the texture:

$$\chi_n = \frac{I_{4n}}{\sum\limits_{n=1-4} I_{4n}}$$

Deviation from parameter $\chi_n$ from its mean value, $\overline{X_n}$, indicates lack of uniformity in the texture. A uniform texture has the following relationship:

$$\chi_n / = 1^{\overline{\chi_n}}$$

for each value of n.

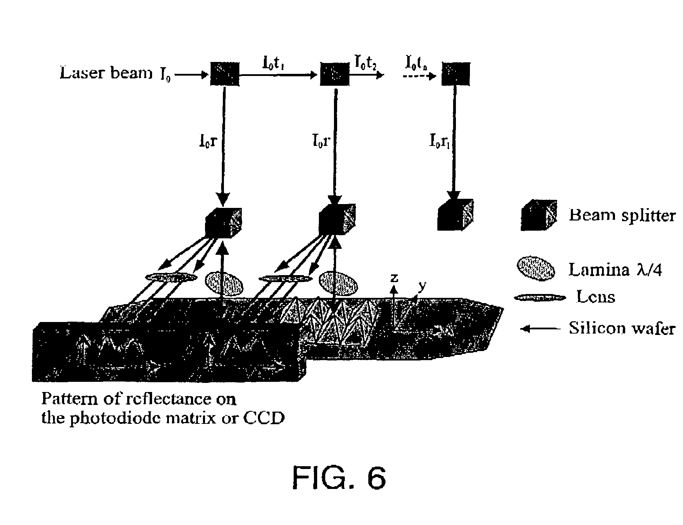

The system described so far enables us to analyze the average area irradiated by the laser beam, typically < 0.5 x 0.5 mm$^2$. To incorporate the system to the production line a bi-dimensional analysis of the wafer is required. Wafers typically have a round shape with a 15 cm diameter. This analysis may be done by a *xy* scan of the wafer, by moving the wafer, or by moving the optic system used for the projection, however, the mobile elements complicate the design and require, in the long term, re-calibration and maintenance. The device described below minimizes the mobile elements and allows for the simultaneous analysis of several points in the wafer while said wafer moves over a conveyor belt in the *y* direction (Figure 6)

Analysis of the direction of movement is done by activating the measuring system at a constant time interval that is related to the wafer's speed of movement The *x* direction analysis is done simultaneously at several points within the wafer by means of dividing the initial laser beam into several beams of equal intensity vertically aimed (z-direction) towards the wafer.

In this particular instance, it is necessary that the laser beam radiation is linearly polarized. The laser beam with an initial intensity of $I_o$ propagating in x direction is split into several secondary beams of equal inten-

sities $I_o r_1$ aimed towards the z- direction. To do this several N beam splitters not-sensitive to the polarization of the incoming light are used and calibrated so their reflectivity $r_n$ fulfils the following relationship:

Where

$$r_n = \frac{r_{n-1}}{1 - r_{n-1}}$$

n=1...N, and

$$r_1 = \frac{1}{N+1}$$

A second set of polarization-sensitive beam divisors combined with λ/4 sheets allows us to redirect the light reflected towards the detectors. The incoming beam hitting the second set of beam divisors must linearly polarized in the y-direction and in such a manner that it can be transmitted by the beam splitter. The λ/4 sheet properly oriented with its axis at a 45˚ angle from the *xy* axis converts the light into circularly polarized light, and after reflecting from the wafer and going through a new transmission in the sheet the light emerges linearly polarized in the x- direction, and therefore it is totally reflected by the polarizing beam splitter in the y-direction. Finally, a lens (previously mentioned) collimates the image in order to project it onto the detector matrix where the intensity of the reflected beams is detected by the photodiodes and analyzed according to the previously described criteria. It is recommended to isolate the optical detection system from the ambient luminosity with interferential filters optimized to the wavelength and emission range of the laser utilized in the procedure and placed the filters in front of the photodiode matrix.

**Description of the figures**

Figure 1    Image obtained by scanning electron microscopy of the squared-based pyramids after chemical etching with NaOH. The angle formed between the pyramid's side faces is calculated from the image and the tilt of the faces in relation to the wafer's plane coincides, within the experimental uncertainty range, with the expected values between planes (111)Si and the planes (111) Si-(100) Si, 70.53˚ and 54.73˚ respectively.

Figure 2    Shows the zenithal image obtained by scanning electro microscopy of the square-based pyramids resulting from the chemical etching with NaOH. As observed, all the pyramids exhibit the same orientation, which makes the reflectance pattern be formed by four points symmetrically placed around the illumination axis.

**Figure 3a**    Simple outline of a reflectance pattern observation device on the textured silicon surfaces by means of a flat display.

**Figure 3b**    Simple outline of a reflectance pattern observation device on the textured silicon surfaces by means of a spherical display. The image in the figure shows a cross section.

**Figure 3c**    Simple outline of a reflectance pattern observation device on the textured silicon surfaces by means of an ellipsoid of revolution display that acts internally as a reflector. The image in the figure shows a cross section.

**Figure 4**    Optical reflectance pattern of a non-textured (100) Si surface. The circular symmetry around the most intense central point can be observed. This point corresponds to the incoming light beam.

**Figure 5**    Optical reflectance pattern of a highly textured (100) Si surface. The order four symmetry around the most intense central point can be observed. This point corresponds to the incoming light beam.

**Figure 6**    Outline of the device proposed for the optical characterization of the degree of texture in the (100) Si wafers.

**Figure 7**    Comparison between the angular distribution of the intensity of the light reflected by a wafer (100) c-Si before the chemical etching process that originates the surface texture (t = 0 min), and that of texture obtained in a sample subject to the etching process during 25 min., where 0 is the observation angle in relation to the normal of the wafer's surface, expressed in degrees.

**Figure 8**    Outline of the multiple reflections of a light ray with normal incidence over a textured surface of the (100) Si.

**Figure 9**    Evolution of the texture parameter G incorporating the time it takes to chemically process the (100) c-Si wafers in an aqueous solution of NaOH and i-C$_3$H$_7$OH. The wafers marked "LAB" have been textured in trial baths while the ones marked as "PL" have been textured in the production line of a solar cell manufacturing facility.

## Example of the embodiment of the invention

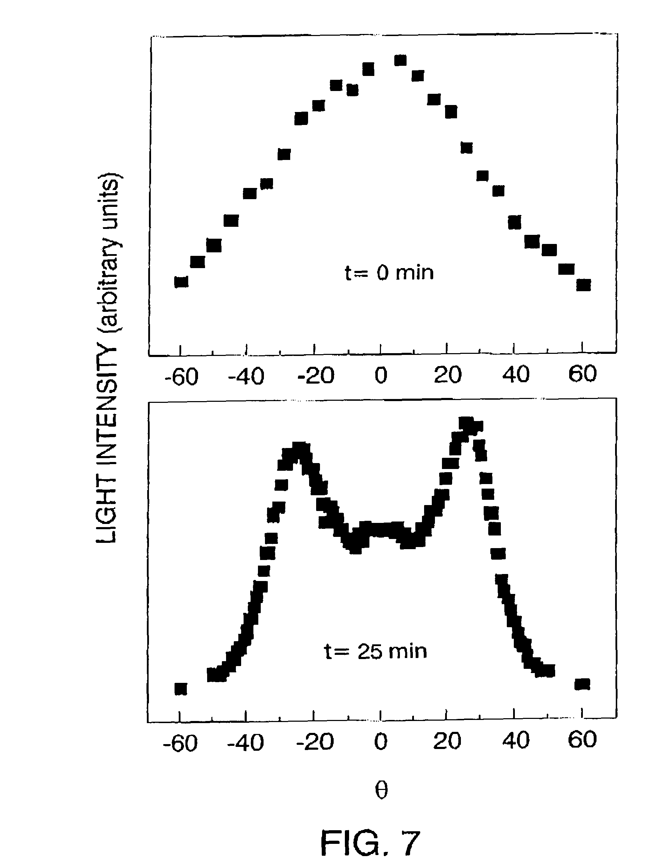

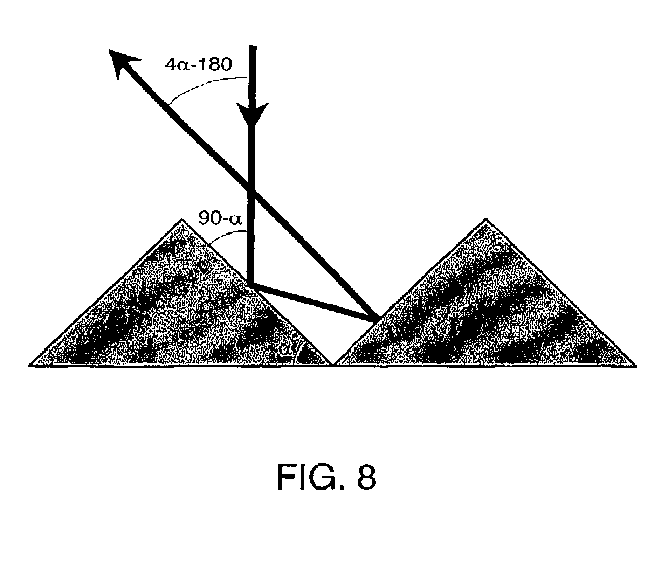

Following the proposed method of measuring the reflectance pattern, Figure 7 presents a comparison of the angular distribution of the light's intensity reflected by an untreated monocrystalline Si (100) wafer and the distribution of a wafer treated in a 5 dm$^3$ aqueous solution of NaOH and i-C$_3$H$_7$OH. The light intensity measurements have been done at various θ angles. This angle is varied on the plane containing the incoming light beam and is perpendicular to the wafer's surface and parallel to one of the sides of the pyramids' base. In addition to a central maximum (θ = 0) that is present even in the non-textured wafers, there are two lateral maximums observed at 0 = 22˚, that correspond to the beams reflected twice in the sides of the pyramids as shown in Figure 8.

According to this figure, the angle of reflectance in relation to the incoming beam (θ) is related to the inclination or tilt (α) of the pyramid's side as shown by the relation θ = 4α - 180˚. It has been observed that the angular gap 20 between the non-specular reflectance varies in the 40-52˚ range as a function of the quality of the texture induced during the chemical etching process. This variation is associated to certain dispersion in the value of α and could be related either to the presence of stagger or any other defects present on the pyramid's faces, or to the crystalline quality of the starting substrate.

To implement the system it is necessary to evaluate the intensity of the reflected light beam parallel to the incoming beam, as well as the intensity of the beams reflected in the maximums when they have an approximate value of 22˚. This is resolved by using a beam splitter, typically a beam-splitter cube. The minimum dimensions of said beam-splitter cube are conditioned by the separation angle between the reflected beams and the separation between the angle and the wafer. To project the light pattern over the optical detection system, it is advisable to incorporate a collimating lens with a focal distance equal to the sum of the distances between the lens axis and the center of the beam splitter, and between the beam splitter and the wafer. To avoid undesired image in the detectors' plane it is necessary that all the optical elements used (beam splitters, lenses, retardant film or sheets, detectors, etc) have anti-reflectant coatings with the same wavelength as that of the laser used during the procedure.

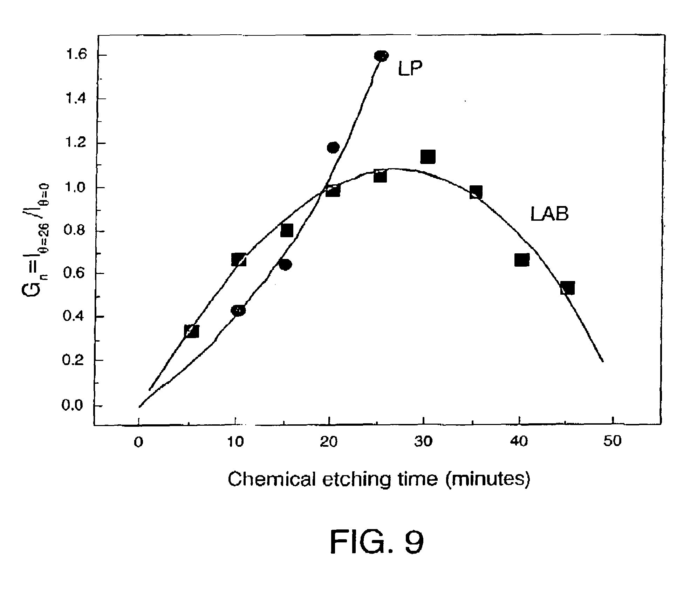

Figure 9 shows a simplified version of the

$$G\left(I_{=26˚} / I_{θ→}\right)$$ parameter as a function of the time of chemical etching process for a scan done on the plane (1 $\overline{10}$) of the Si wafers treated according to the method described above. The results obtained in the production line (PL) using baths of a similar chemical composition but in larger dimensions are also included. It is observed that there is a critical time period needed to reach the maximum degree of texture and that time periods that exceed said critical time period cause the flattening of the pyramids inducing the decrease of the G parameter. The results of the wafers treated at the production line in highly clean conditions reach greater G values than those obtained during the trial baths. The kinetics of the process is probably different, and this, together with the impossibility of exceeding the treatment time during the production process has prevented the observation of the maximum.

Although the example just described refers to four sided pyramidal geometries, this does not imply that the method is restricted solely to that type of geometry, since it is essentially valid for other geometrical figures (n-side pyramids, cones, etc.) that can also form on the Si surface, whether by chemical etching or other type of processes.

## Claims

1. A procedure to establish the degree of surface texture of wafers of semiconductor material, and specifically of monocrystalline or multicrystalline silicon wafers, **characterized in that**:

    a. it uses a set of mathematical parameters:

    $$G = \frac{\sum_{n=1-4} I_{4n}}{I_N}$$

    where $I_{4n}$ and n ranges from 1 to 4, is the intensity of the light reflected to a given angle separated from the normal in a four-order symmetry, and $I_N$ is the intensity normally reflected to the wafer's surface,
    and

    $$\chi_n = \frac{I_{4n}}{\sum_{n=1-4} I_{4n}}$$

    is a formula that allows correlating the intensity maximums in the pattern of reflected light obtained from a collimated beam with normal incidence with the total degree of surface texture and uniformity in semiconductor wafers, particularly in silicon;
    b. it relates the intensity of the collimated beam reflected to a solid angle, whether centered or separated from the collimated beam's angle of incidence, with the degree of textured filling on the surface of the wafer of the material analyzed;

    c. it establishes the degree of texture of the wafer's surface by means of analyzing the maximums in the pattern of intensity of the reflected collimated beam;
    d. it enables the simultaneous and non-destructive analysis of the texture in several different points on the wafer's surface;
    e. it uses the rotation of the polarization of the sampling beam to separate the reflected beams from the incident beam.

2. Procedure to measure the intensity of the reflectance pattern of the wafer's surface according to claim 1, and **characterized by** the analysis of the reflected image obtained when the wafer is illuminated with the collimated beam on screens of various geometries:

    a. flat screen placed parallel to the wafer;
    b. wafer-centered spherical or hemispherical screen;
    c. ellipsoid of revolution-shaped screen with the wafer placed at one of the foci and the beam passing through the opposite one.

3. Procedure to analyze the measurement of reflection patterns according to claims 1 and 2, and applicable, amongst other, to monocrystalline silicon wafers, and **characterized in that**:

    a. it associates the reflections with n-order symmetry n , where n= 3, 4, 6..., to the presence of geometrical structures located on the surface of the wafer, preferably a silicon wafer, with this same symmetry;
    b. it defines a method to measure the angle formed by the wafer's surface and the faces of the geometrical structures that form the texture;
    c. it relates the angular width of the reflectance maximums to the presence of defects on the geometrical structures that form the texture and to the degree of multicrystallinity of the starting substrate;
    d. it obtains and defines the existence of an optimum degree of texture related to the time of chemical processing and to the appearance of a reflectance maximum at an angle θ of 26˚ to 20˚ for the same processing time;
    e. it associates the relationship between the intensities of the light normally reflected, where angle θ is 0˚, and light reflected at an angle θ of 26˚ to 20˚, with the degree of texture associated to silicon planes (111);
    f. it associates the optical reflection angle θ with the average tilt of the sides of the pyramids that form the surface texture.

4. Device for carrying out the procedure of claims 1, 2, and 3 that allows the simultaneous non-invasive and non-destructive analysis of the degree of texture of several points of the wafer re-aiming the reflected light in a direction spatially separated from an incident beam and that is **characterized in that**:

a. it uses the set of mathematical parameters as defined in claim 1, that characterize the total degree and uniformity of the texture and serve to establish the surface texture of the wafers, allowing in turn to determine the correlation between the degree of texture of the wafer's surface with the intensity maximums present on the reflected light pattern;

b. it relates the intensity of a collimated beam reflected at a solid angle, centered or separated from the incidence of the collimated beam axis, to the degree of textured filling on the surface of the wafer of the analyzed material;

c. it establishes the degree of texture of the wafer's surface by means of analyzing the intensity of the maximums present in the pattern of reflection of the collimated beam;

d. it allows for the simultaneous analysis of the texture at various different points located on the wafer's surface by designing the reflectance of the optic elements utilized to split the beam;

e. it utilizes the rotation of the polarization of the sampling beam together with the optic elements sensitive to the polarization status to separate the reflected beams from the incident beam;

f. it analyzes the reflection image obtained on a flat screen placed perpendicularly from the wafer when the wafer is illuminated by the collimated beam;

g. it associates the reflections with order-n symmetry n where n= 3, 4, 6,..., to the presence of geometric structures on the surface of the wafer, particularly on silicon wafers exhibiting that same symmetry;

h. it measures the angle formed by the wafer's surface and the faces of the geometric shapes that form the texture;

i. it relates the angular width of the reflection maximums to the order four symmetry and to the degree of multicrystallinity of the starting substrate;

j. it measures and obtains the relationship between the intensity of light reflected normally, where angle θ is 0˚, and at an angle θ of 26˚ to 20˚ with the degree of texture associated to silicon planes (111);

k. it measures the optical reflection angle θ associated to the average tilt of the faces of the pyramids that form the surface texture.

**Patentansprüche**

1. Verfahren zum Feststellen des Grades an Oberflächentextur von Wafern aus Halbleitermaterial und Insbesondere monokristalliner oder muftikristalliner Siliziumwafer, **dadurch gekennzeichnet, dass:**

a) es einen Satz mathematischer Parameter:

$$G = \frac{\sum_{n=1-4} I_{4n}}{I_N}$$

verwendet, wobei $I_{4n}$ (n reicht von 1 bis 4) die Intensität des Lichtes ist, das in einen gegebenen Winkel reflektiert wird, der von der Normalen in einer vierstufigen Symmetrie getrennt ist, und IN die Intensität ist, die normal von der Oberfläche des Wafers reflektiert wird, und

$$\chi_n = \frac{I_{4n}}{\sum_{n=1-4} I_{4n}}$$

eine Gleichung ist, die es erlaubt, die Intensitätsmaxima in dem Muster von reflektiertem Licht, das aus einem kollimierten Strahl mit normalem Auftreffen gewonnen wird, und den Gesamtgrad an Oberflächenstruktur sowie Gleichmäßigkeit bei Halbleiterwafern, insbesondere Silizium, zu korrelieren;

b) es die Intensität des kollimierten Strahls, der zentriert oder vom Auftreffwinkel des kollimierten Strahls getrennt in einen Raumwinkel reflektiert wird, auf den Grad texturierter Füllung an der Oberfläche des Wafers des analysierten Materials bezieht;

c) es den Grad an Textur der Oberfläche des Wafers mittels Analyse der Maxima in dem Muster von Intensität des reflektierten kollimierten Strahls feststellt;

d) es simultane und zerstörungsfreie Analyse der Textur an verschiedenen Punkten auf der Oberfläche des Wafers ermöglicht;

e) es die Rotation der Polarisierung des Abtaststrahls verwendet, um die reflektierten Strahlen von dem auftreffenden Strahl zu trennen.

2. Verfahren zum Messen der Intensität des Reflektionsmusters der Wafer-Oberfläche nach Anspruch 1, **gekennzeichnet durch** die Analyse des reflektierten Bildes, das gewonnen wird, wenn der Wafer mit dem kollimierten Strahl beleuchtet wird, auf Schirmen verschiedener Geometrie, d. h.:

a) einen flachen Schirm, der parallel zu dem Wafer angeordnet ist;

b) einen auf den Wafer zentrierten kugelförmigen oder halbkugelförmigen Schirm;
c) einen rotationsellipsoidförmigen Schirm, wobei der Wafer an einem der Brennpunkte angeordnet ist und der Strahl **durch** den gegenüberliegenden hindurchtritt.

**3.** Verfahren zum Analysieren der Messung von Reflektionsmustern nach den Ansprüchen 1 und 2, das unter anderem bei monokrlstallinen Siliziumwafern eingesetzt werden kann, **dadurch gekennzeichnet, dass**:

a) es die Reflektionen mit n-stufiger Symmetrie, wobei n = 3, 4, 6 ---, mit dem Vorhandensein geometrischer Strukturen verbindet, die sich an der Oberfläche des Wafers, vorzugsweise eines Sihzium-Wafers, mit der gleichen Symmetrie befinden;
b) es eine Methode zum Messen des Winkels definiert, der durch die Wafer-Oberfläche und die Flächen der geometrischen Strukturen gebildet wird, die die Textur bilden;
c) es die Winkelbreite der Reflektions-Maxima auf das Vorhandensein von Defekten an den geometrischen Strukturen, die die Textur bilden, und auf den Grad an Multikristellirlität des Ausgangssubstrates bezieht;
d) es das Vorhandensein eines optimalen Grades an Textur bezüglich der Zeit chemischer Verarbeitung und des Auftretens eines Reflektlonsmaximums in einem Winkel von 26˚ bis 20˚ für die gleiche Verarbeitungszeit gewinnt und definiert;
e) es die Beziehung zwischen den Intensitäten des Lichtes, das normal reflektiert wird, wobei Winkel θ 0˚ beträgt, und des Lichtes, das bei einem Winkel θ von 26˚ bis 20˚ reflektiert wird, mit den Grad an Textur verbindet, der mit Silizium-Ebenen (111) verbunden ist;
f) es den optischen Reflektionswinkel θ mit der durchschnittlichen Neigung der Seiten der Pyramiden verbindet, die die Oberfhächentextur bilden.

**4.** Vorrichtung zum Ausführen des Verfahrens nach den Ansprüchen 1, 2 und 3, das die simultane nicht invasive und zerstörungsfreie Analyse des Grades an Textur verschiedener Punkte des Wafers und des erneuten Ausrichtens des reflektierten Lichtes in einer Richtung zulässt, die räumlich von einem auftreffenden Strahl getrennt ist, und die **dadurch gekennzeichnet ist, dass**:

a) sie den Satz mathematischer Parameter verwendet, wie er in Anspruch 1 definiert ist, die den Gesamtgrad und die Gleichmäßigkeit der Textur charakterisieren und dazu dienen, die Obertlächentextur der Wafer festzustellen, was es wiederum zulässt, die Korrelation zwischen dem Grad an Textur der Wafer-Oberfläche und die Intensitäts-Maxima zu korrelieren, die an dem reflektierten Lichtmuster vorhanden sind;
b) sie die Intensität eines kollimierten Strahls, der in einem Raumwinkel, auf das Auftreffen der Achse des kollimierten Strahls zentriert oder davon getrennt auf den Grad von Textur-Füllung an der Oberfläche des Wafers des analysierten Materials bezieht;
c) sie den Grad an Textur der Wafer-Obarftache durch Analysieren der Intensität der Maxima feststellt, die in den Reflektionsrnustern des kollimierten Strahls vorhanden sind;
d) sie die simultane Analyse der Textur an mehreren verschiedenen Punkten, die sich an der Wafer-Oberfläche befinden, durch Gestalten der Reflektion der optischen Elemente zulässt, die verwendet werden, um den Strahl zu teilen;
e) sie die Drehung der Polarisation des Abtaststrahls zusammen mit den optischen Elementen nutzt, die gegenüber dem Polarisationszustand empfindlich sind, um die reflektierten Strahlen von dem auftreffenden Strahl zu trennen;
f) sie das Reflektionsbild analysiert, das an einem flachen Bildschirm gewonnen wird, der senkrecht zu dem Wafer angeordnet wird, wenn der Wafer mit dem kollimierten Strahl beleuchtet Wird:
g) sie die Reflektionen mit n-stufiger Symmetrie, wobei n = 3, 4, 6, ..., mit dem Vorhandensein geometrischer Strukturen an der Oberfläche des Wafers, insbesondere an Silizium-Wafem, verbindet, die die gleiche Symmetrie aufweisen;
h) sie den Winkel misst, der durch die Wafer-Oberfiache und die Flächen der geometrischen Formen gebildet wird, die die Textur bilden;
i) sie die Winkelbreite der Reflektions-Maxima auf die vierstufige Symmetrie und den Grad an Multikristallinität des Ausgangssubstrats bezieht;
j) sie die Beziehung zwischen der Intensität von Licht, das normal reflektiert wird, wobei Winkel θ 0˚ beträgt, und In einem Winkel θ von 26˚ bis 20˚ reflektiert wird, zu dem Grad an Textur ermittelt, der mit Silizium-Ebenen (111) verbunden ist;
k) sie den optischen Reflektionswinkel θ misst, der mit der durchschnittlichen Neigung der Flächen der Pyramiden verbunden ist, die die Oberflächentextur bilden.

## Revendications

**1.** Procédure destinée à établir le degré de texture superficielle de tranches de matériau semi-conducteur, et précisément de tranches de silicium monocristallin ou polycristallin, **caractérisée en ce que** :

a. elle utilise un ensemble de paramètres mathématiques :

$$G = \frac{\sum_{n=1-4} I_{4n}}{I_N}$$

où $I_{4n}$, n étant dans une plage de 1 à 4, est l'intensité de la lumière réfléchie vers un angle donné séparé de la normale dans une symétrie du quatrième ordre, et $I_N$ est l'intensité normalement réfléchie vers la surface de la tranche, et

$$X_n = \frac{I_{4n}}{\sum_{n=1-4} I_{4n}}$$

est une formule qui permet de mettre en corrélation les maximas d'intensité dans le motif de lumière réfléchie obtenu à partir d'un faisceau collimaté d'une incidence normale avec le degré total de texture superficielle et d'uniformité dans les tranches semi-conductrices, en particulier dans le silicium ;

b. elle met en relation l'intensité du faisceau collimaté réfléchi vers un angle solide, qu'il soit centré sur l'angle d'incidence du faisceau collimaté ou séparé de celui-ci, avec le degré de remplissage texturé sur la surface de la tranche du matériau analysé ;

c. elle établit le degré de texture de la surface de la tranche au moyen d'une analyse des maximas dans le motif d'intensité du faisceau collimaté réfléchi ;

d. elle permet l'analyse simultanée et non destructive de la texture en plusieurs points différents sur la surface de la tranche ;

e. elle utilise la rotation de la polarisation du faisceau d'échantillonnage pour séparer les faisceaux réfléchis du faisceau incident.

2. Procédure destinée à mesurer l'intensité du motif de réflectance de la surface de la tranche selon la revendication 1, **caractérisée en ce qu'**elle comprend l'analyse de l'image réfléchie obtenue lorsque la tranche est éclairée avec le faisceau collimaté sur des écrans de diverses formes géométriques :

a. un écran plat placé de manière parallèle par rapport à la tranche ;

b. un écran sphérique ou hémisphérique centré sur la tranche ;

c. un écran ellipsoïdal avec la tranche placée au niveau de l'un des foyers, le faisceau passant à travers le foyer opposé.

3. Procédure destinée à analyser la mesure des motifs de réflexion selon les revendications 1 et 2, et applicable, entre autres, à des tranches de silicium monocristallin, et **caractérisée en ce que** :

a. elle associe les réflexions avec une symétrie d'ordre n, où n - 3, 4, 6, ..., à la présence de structures géométriques situées sur la surface de la tranche, de préférence une tranche de silicium, avec cette même symétrie ;

b. elle définit un procédé destiné à mesurer l'angle formé par la surface de la tranche et les faces des structures géométriques qui forment la texture ;

c. elle met en relation la largeur angulaire des maximas de réflectance avec la présence de défauts sur les structures géométriques qui forment la structure liée avec le degré de polycristallinité du substrat de départ ;

d. elle obtient et définit l'existence d'un degré optimum de texture en rapport avec le temps de traitement chimique et l'aspect d'un maximum de réflectance à un angle 9 de 26˚ à 20˚ pour le même temps de traitement ;

e. elle associe la relation entre les intensités de la lumière normalement réfléchie, où l'angle θ est de 0˚, et la lumière réfléchie à un angle θ de 26˚ à 20˚, avec le degré de texture associé aux plans de silicium (111) ;

f. elle associe l'angle de réflexion optique θ avec l'inclinaison moyenne des côtés des pyramides qui forment la texture superficielle.

4. Dispositif destiné à exécuter la procédure selon les revendications 1, 2 et 3 qui permet l'analyse simultanée non invasive et non destructive du degré de texture de plusieurs points de la tranche redirigeant la lumière réfléchie dans une direction spatialement séparée d'un faisceau incident et qui est **caractérisé en ce que** :

a. il utilise l'ensemble de paramètres mathématiques tels que définis selon la revendication 1, qui caractérisent le degré total et l'uniformité de la texture et servent à établir la texture superficielle des tranches, permettant à son tour de déterminer la corrélation entre le degré de texture de la surface de la tranche et les maximas d'intensité présents sur le motif de lumière réfléchie ;

b. il met en rapport l'intensité d'un faisceau collimaté réfléchi selon un angle solide, centré sur l'incidence de l'axe du faisceau collimaté ou séparé de celle-ci, avec le degré de remplissage texturé sur la surface de la tranche du matériau analysé ;

c. il établit le degré de texture de la surface de la tranche au moyen d'une analyse de l'intensité des maximas présents dans le motif de réflexion du faisceau collimaté ;

d. il permet l'analyse simultanée de la texture au niveau de divers points différents situés sur la surface de la tranche en désignant la réflectance des éléments optiques utilisés pour diviser le faisceau ;

e. il utilise la rotation de la polarisation du faisceau d'échantillonnage ainsi que les éléments optiques sensibles à l'état de la polarisation pour séparer les faisceaux réfléchis du faisceau incident ;

f. il analyse l'image réfléchie obtenue sur un écran plat placé perpendiculairement par rapport à la tranche lorsque la tranche est éclairée par le faisceau collimaté ;

g. il associe les réflexions avec une symétrie d'ordre n, où n = 3, 4, 6, à la présence de structures géométriques sur la surface de la tranche, en particulier sur des tranches de silicium présentant cette même symétrie ;

h. il mesure l'angle formé par la surface de la tranche et les faces des formes géométriques qui forment la texture ;

i. il met en rapport la largeur angulaire des maximas de réflexion avec la symétrie du quatrième ordre et avec le degré de polycristallinité du substrat de départ ;

j. il mesure et obtient la relation entre l'intensité de la lumière réfléchie normalement, où l'angle $\theta$ est de 0°, et à un angle $\theta$ de 26° à 20° avec le degré de texture associé aux plans de silicium (111) ;

k. il mesure l'angle de réflexion optique $\theta$ associé à l'inclinaison moyenne des faces des pyramides qui forment la texture superficielle.

FIG. 1

FIG. 2

**FIG. 3a**

**FIG. 3b**

Ellipsoid of reflector

Laser

Ellipse foci

FIG. 3c

FIG. 4

FIG. 5

Laser beam $I_0$

$I_0 t_1$

$I_0 t_2$

$I_0 t_n$

$I_0 r$

$I_0 r$

$I_0 r_1$

z

y

Beam splitter

Lamina λ/4

Lens

Silicon wafer

Pattern of reflectance on
the photodiode matrix or CCD

# FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6451218 B
- US 4137123 A

### Non-patent literature cited in the description

- **K. FUKUI ; Y. OKADA ; H. INOMATA ; S. TAKAHASHI ; Y. FUJII ; FUKAWA ; K. SHIRASAWA.** Surface and bulk-passivated large area multicrystalline silicon solar cells. *Solar Energy Materials & Solar Cells,* 1997, vol. 48, 219-228
- **W.A. NOSITSCHKA ; C. BENEKING ; O. VOIGT ; H. KURZ.** Texturisation of multicrystalline silicon wafer for solar cells by reactive ion etching through colloidal masks. *Solar Energy Materials & Solar Cells,* 2003, vol. 76, 155-166
- **Y. YEROKHOV ; R. HEZEL ; M. LIPINSKI ; R. CIACH ; H. NAGEL ; A. MYLYANYCH ; P. PANEK.** Cost-effective methods of texturing for silicon solar cells. *Solar Energy Materials & Solar Cells,* 2002, vol. 72, 291-298
- **J. ZHAO ; A. WANG ; M.A. GREEN ; F. FERRAZA.** 19.8% efficient ''honeycomb'' textured multicrystalline and 24.4% monocrystalline silicon solar cells. *Applied Physics Letters,* 1998, vol. 73, 1991-1993
- **P. CAMPBELL ; M.A. GREEN.** High performance light trapping textures for monocrystalline silicon solar calls. *Solar Energy Materials & Solar Cells,* 2001, vol. 65, 369-375
- **Z. XI ; D. YANG ; D. QUE.** Texturization of monocrystalline silicon with tribasic sodium phosphate. *Solar Energy Materials & Solar Cells,* 2003, vol. 77, 255-263
- **Y. NISHIMOTO ; K. NAMBA.** Investigation of texturization for crystalline silicon solar cells with sodium carbonate solutions. *Solar Energy Materials & Solar Cells,* 2000, vol. 61, 393-402
- **W. MILLER ; A. METZ ; R. HEZEL.** A new and simple approach for fabricating inverted pyramids on crystalline silicon solar cells. *Proceedings of the 17th European Photovoltaic Solar Energy Conference,* 2001
- **A. PARETTA ; E. BOBEICO ; L. LANCELLOTTI ; P. MORVILLO ; A. WANG ; J. ZHAO.** A new approach to the analysis of light collected by textured silicon surfaces. *Paper 1P- C3 -14 in the 3rd World Conference on Photovoltaic Energy Conversion,* 12 May 2003
- **A. PARETTA ; A. SARNO ; P. TORTOTA ; H. YAKUBU ; P. MADDALENA ; J. ZHAO ; A. WANG.** Angle-dependent reflectance measurements on photovoltaic materials and solar cells. *Optical Communications,* 1999, vol. 172, 139-151